# EUROPÄISCHE PATENTSCHRIFT

(11) **EP 1 132 348 B1**
(45) Veröffentlichungstag und Bekanntmachung des Hinweises auf die Patenterteilung: **28.04.2010**
(21) Anmeldenummer: 01104556.4
(22) Anmeldetag: 05.03.2001
(51) Int. Cl.: C02F 3/12, B65D 88/62

(54) **Abwasserkläranlage und -verfahren**
Installation and process for purification of waste water
Installation et procédé d'épuration d'eaux usées

(30) Priorität: 06.03.2000 DE 10010853
(43) Veröffentlichungstag der Anmeldung: 12.09.2001
(73) Patentinhaber: Dederichs, Axel, Dipl. Ing., 23911 Schmilau (DE)
(72) Erfinder: Dederichs, Axel, Dipl. Ing., 23911 Schmilau (DE)
(74) Vertreter: UEXKÜLL & STOLBERG

(56) Entgegenhaltungen:
- AT-B- 403 902
- DE-A- 2 401 872
- DE-C- 19 624 834
- DE-U- 29 805 419

## Beschreibung

Die Erfindung betrifft ein Abwasserklärverfahren nach dem Oberbegriff des Patentanspruchs 1 und eine entsprechende Abwasserkläranlage zu dessen Durchführung.

Die Erfindung geht also von Abwasserklärverfahren und -anlagen aus, bei denen Abwasser in einem ersten separaten Behälter oder Wasseraufnahmevolumen gesammelt wird und von dort aus chargenweise in ein weiteres Wasseraufnahmevolumen übergeleitet wird, in dem die Abwassercharge einer Behandlung/Reinigung unterzogen wird, bevor ein geklärter Teil daraus abgeleitet wird.

Derartige Klärverfahren werden als sequentielle Abwasserklärverfahren bezeichnet, nämlich als Belebungsverfahren mit Aufstaubetrieb gehören, wie sie in dem Merkblatt ATV-M210, ATV-Regelwerk der Gesellschaft zur Förderung der Abwassertechnik e.V. ausführlich dargestellt sind. Darunter werden Verfahren zur biologischen Abwasserreinigung verstanden, bei denen zur biologischen Abwasserreinigung belebter Schlamm eingesetzt wird. Dabei finden die biologischen Reinigungsprozesse und die Abtrennung des belebten Schlammes vom gereinigten Abwasser in ein und demselben Klärbecken über einen längeren Zeitraum hin statt. Vor dem eigentlichen Klärbecken befindet sich meist ein Vorspeicherbehälter, in dem das zulaufende Abwasser gesammelt wird. Ist eine genügende Menge Abwasser in dem Vorspeicherbehälter angesammelt, wird dieses in das Klärbecken gepumpt, wobei der Wasserspiegel in dem Vorspeicherbehälter sinkt, während er in dem Klärbecken entsprechend ansteigt. In dieser Füllphase wird das zu reinigende Abwasser in dem Klärbekken aufgestaut und nach Abschluß der Abwasserzuleitung einer Mischphase unterzogen, während der sich anoxische und/oder anaerobe Milieubedingungen einstellen. An eine Belüftungsphase schließt sich eine Absetzphase an, während der belebter Schlamm im unteren Bereich des Klärbeckens sedimentiert. Schließlich wird, wenn sich durch die Sedimentierung eine ausreichend große, oben liegende Schicht aus klarem Wasser gebildet hat, dieses klare Wasser abgezogen oder abgepumpt. Diese Ableitung des klaren Wassers erfolgt meist nicht direkt in einen Wasserlauf, da sonst beim Ablassen einer Klarwassercharge eine zu starke Anfüllung des Wasserlaufs (z.B. eines kleinen Bachs) auftreten könnte, sondern in einen Ablaufbehälter, der zunächst mit dem klaren Wasser gefüllt wird und aus dem dieses dann kontinuierlich, bis zum Eintreffen der nächsten Klarwassercharge, abgelassen wird.

Solche Verfahren sind auch unter dem Kürzel SBR (Sequencing Batch Reactor) bekannt, was darauf hinweist, dass das Abwasser chargenweise behandelt wird (Batch Reactor), dass die dazu benötigten Prozesse, wie biologischer Abbau und Sedimentation, in einer zeitlichen Folge (Sequenz) ablaufen und dass diese Sequenz stetig wiederholt wird (Sequencing).

Aus der obigen Beschreibung ist zu erkennen, dass in derartigen Anlagen das Wasser in verschiedene Wasseraufnahmevolumina (Vorspeicherbehälter, Klärbecken, Ablaufbehälter) aufeinander folgend eingefüllt wird. Dabei steigt jeweils beim Befüllen der Wasserspiegel in dem jeweiligen Wasseraufnahmevolumen an. Diese Verfahrensweisen und Anlagen sind baulich recht aufwendig, da die Wasseraufnahmevolumina (Vorspeicherbehälter, Klärbecken und Ablaufbehälter) zusätzlich zu ihrem Grundvolumen jeweils das Volumen einer Charge aufnehmen können müssen. Weiterhin sind die bekannten Anlagen bautechnisch relativ aufwendig, da drei separate Wasseraufnahmevolumina als Behälter aufgebaut sein müssen. Ferner wird beim Überleiten des Wassers aus einem Wasseraufnahmevolumen ins Nächste relativ viel Energie benötigt, um den Wasserspiegel in dem nächsten Wasseraufnahmevolumen anzuheben.

Neben den sequentiellen Verfahren, auf die sich die vorliegende Erfindung bezieht, sind sogenannte Durchlaufverfahren zur Abwasserklärung bekannt, bei denen das Abwasser mehrere Zonen für verschiedene Verfahrensschritte durchläuft, wobei die Zonen allerdings in Fließverbindung miteinander stehen, so dass ein kontinuierlicher Durchfluss gegeben ist und somit keine separaten Wasseraufnahmevolumina wie bei den vorher beschriebenen, gattungsgemäßen Verfahren vorhanden sind. Die Fließverbindung zwischen den Zonen ergibt einen konstanten Wasserspiegel über die Anlage. Die Zonen können beispielsweise durch Tauchwände oder Wände mit Durchflussöffnungen gebildet werden, die einen Behälter oder ein Becken in Zonen unterteilen. Zwar ist der konstante Wasserspiegel der Durchlaufverfahren verfahrenstechnisch von Vorteil, auf der anderen Seite sind diese Verfahren den oben beschriebenen unter anderem in Hinblick auf die Effizienz der Klärung unterlegen.

In AT 403 902 B ist eine Durchlaufkläranlage beschrieben, in der ein Behälter in mehrere Kammern unterteilt ist, wobei die Unterteilung durch Folie ausgeführt ist, die zwischen den Wänden des Behälters gespannt ist. Die Kammern stehen durch Überströmöffnungen in den Folien oder durch ein Lücke zwischen Folienrändern und Behälterwänden dauernd in Durchflussverbindung miteinander.

Kläranlagen mit einem Behälter unterteilt in mehreren Kammern mittels wählbaren folienförmigem oder flexiblen Trennwänden aus Kunststoff sind ebenfalls aus DE 29805419(U1) oder DE 19624834(C1) bekannt.

Es ist Aufgabe der vorliegenden Erfindung, eine gattungsgemäßes Abwasserkläverfahren und eine entsprechende Abwasserkläranlage anzugeben, die einfacher und anlagentechnisch weniger aufwendig sind.

Zur Lösunge dieser Aufgabe dienen die kennzeichnenden Merkmale des Abwasserklärverfahrens nach Patentanpruch 1 in verbindung mit dessen Oberbegriff sowie die kennzeichnenden Merkmale der Abwasserkläranlage nach Anspruch 5 in Verbindung mit dessen Oberbegriff. Vorteilhafte Ausführungsformen der Erfindung sind in den Unteransprüchen angegeben.

Gemäß der vorliegenden Erfindung werden die separaten Wasseraufnahmevolumina in einem Becken durch wenigstens eine bewegliche Trennwand, die durch eine flexible Folie gebildet wird, in einem Becken abgeteilt, die die angrenzenden Wasseraufnahmevolumina voneinander abtrennt. Die Folien sind dabei derart beweglich ausgestaltet, dass bei Überleitung einer Wassercharge von einem in das nachfolgende Wasseraufnahmevolumen der Wasserspiegel darin konstant bleibt und die durch die Überleitung der Wassercharge in das nächste Wasseraufnahmevolumen bedingten volumenänderungen durch ausgleichende, passive Bewegung der flexiblen Folien in dem Becken realisiert werden, so dass das Abwasser die Wasseraufnahmevolumina ohne Wasserspiegeländerungen durchläuft. Jede Folie ist in sich flexibel, fest in Beckengrund und -seiten verankert und hat zudem eine größere Fläche als die Querschnittsfläche des Becken, so dass sich die flexible Folie nach der einen Seite oder nach der anderen Seite, wie ein Segel, vorwölben kann, wodurch die an die flexible Trennwand angrenzenden Wasseraufnahmevolumina in ihrem Volumen gegenläufig, bei gleichzeitig konstant bleibendem Wasserspiegel verändert werden. Eine solche wasserdichte flexible Folie gebildet werden kann insbesondere eine gewebeverstärkte Kunststofffolie sein.

Mit der vorliegenden Erfindung ist es somit erstmals möglich, einen wesentlichen Nachteil der klassischen SBR-Verfahren (sich drastisch ändernde Wasserspiegel) vollkommen zu eliminieren, gleicheitig den Vorteil der SBR-Verfahren, nämlich hohe Klärungseffektivität in getrennten Wasseraufnahmevolumina, zu erhalten und das Verfahren gleichzeitig so zu führen, dass es einen wesentlichen Vorteil der Durchlaufverfahren auch verwirklicht (nämlich konstante Wasserspiegel im gesamten Verfahrensablauf, mit der Möglichkeit konstanten Zu- und Ablaufs), so dass sich die wesentlichen Vorteile von klassichen SBR-Verfahren und von Durchlaufverfahren in einem Verfahren kombiniert realisieren lassen.

Gemäß der vorliegenden Erfindung ist es ausreichend, ein einziges Klärbecken bereitzustellen, das durch bewegliche Trennwände unterteilt wird. Dies stellt bereits eine erhebliche Reduzierung des Bauaufwands gegenüber den bisher vorgesehenen, separat aufgebauten Behältern der einzelnen Wasseraufnahmevolumina dar.

Des Weiteren bedeutet es eine erhebliche verfahrenstechnische und konstruktive Vereinfachung, dass die Wasserspiegel in den einzelnen Wasseraufnahmevolumina konstant bleiben. Dadurch kann zum Einen der Energieaufwand reduziert werden, da beim Überleiten einer Wassercharge aus einem Wasseraufnahmevolumen in das Nächste keine Energie zum Anheben des Wasserspiegels in dem Letzteren aufgebracht werden muss, sondern praktisch lediglich der Fließwiderstand in der Leitung überwunden werden muss.

Ferner bedeutet es eine erhebliche Reduzierung des Bauaufwands, da sich das benötigte Gesamtbehältervolumen reduziert, weil nicht das gesamte Chargenvolumen gleichzeitig in allen Behältern oder Wasseraufnahmevolumina vorgehalten werden muss, sondern nur einmal über das Gesamtvolumen.

Ein weiterer Vorteil des erfindungsgemäßen Abwasserklärverfahrens liegt darin, dass dieses trotz seines chargenweisen Betriebs, das charakteristisches Ablaufverhalten des Durchlaufverfahrens hat. Daher können Apparate zur Ablaufmengenregulierung, wie sie im Stand der Technik zum langsamen Abfließenlassen des Wassers aus dem Ablaufbehälter benötigt wurden, komplett entfallen.

In diesem Zusammenhang zeigt sich noch ein weiterer Vorteil der Erfindung, nämlich dass die Messtechnik gegenüber herkömmlichen Anlagen und Verfahren stark vereinfacht ist, da keine Wasserspiegel- bzw. Füllstandsmessungen in den einzelnen Wasseraufnahmevolumina notwendig sind, sondern nur die Stellung der Trennwände registriert wird, was, z.B. bei drei Wasseraufnahmevolumina, lediglich zwei vereinfachte Messungen der Auslenkungswege der Trennwände erfordert.

Ferner können die Belüftungseinrichtung und die Umwälzeinrichtung in dem Klärbecken optimal ausgelegt werden, da es keine Wasserspiegelschwankungen gibt. Im Stand der Technik war es notwendig, die Belüftungseinrichtung soweit überzudimensionieren, dass auch bei reduziertem Wasserspiegel genügend Luftsauerstoff beim Durchtritt durch die Wasserschicht in das Wasser überging. Auch die Umwälzeinrichtung kann an einen vorgegebenen, konstanten Wasserspiegel optimal angepaßt werden.

Schließlich kann durch die Erfindung die Gesamtzeit der Sedimentations- und Klarwasserabzugsphase reduziert werden, Trennwände verwendet werden, die an der Behältersohlfläche befestigt sind und sich weiter oben zum Volumenausgleich vorwölben oder verformen. Im Stand der Technik musste eine bereits erhebliche fortgeschrittene Absetzung des Schlamms abgewartet werden, damit der sinkende Wasserspiegel beim Klarwasserabzug die Schlammgrenze nicht vorzeitig einholt. Bei Anwendung der Erfindung kann der Klarwasserabzug bereits früher einsetzen, da bei gleichem Klarwasserabzugsvolumen pro Zeiteinheit die Wasserfläche in der oben liegenden Klarwasserphase durch die oben zusammenrückenden Trennwände mehr abnimmt, während die Wasserfläche im unteren Schlammbereich, wo die Trennwände am Beckengrund befestigt sind, nahezu konstant bleibt. D.h., dass die Sinkkomponente des Wasserspiegels vollständig durch die Horizontalbewegung der Trennwände ersetzt wird. Dadurch nimmt die Dicke der Klarwasserschicht verhältnismäßig langsamer ab, und es kann insofern die Klarwasserabzugsphase früher einsetzten und schneller durchgeführt werden, was den Gesamtwirkungsgrad des Verfahrens erhöht. Anders ausgedrückt werden die beweglichen Trennwände derart bewegt, dass die dem Klarwasserbzug entsprechende (theoretische) Wasserspiegelabsenkung durch die Schlammspiegelanhebung infolge der Flächenreduzierung des Wasseraufnahmevolumens in Schlammspiegelhöhe ersetzt wird, so dass sich die Gesamtzeit für die Sedimentations- und Klarwasserabzugsphase verkürzt.

Es ist ein weiterer wesentlicher Vorteil der vorliegenden Erfindung, dass das erfindungsgemäße Verfahren auch in bestehenden Altanlagen relativ einfach angewendet werden kann. So gibt es z.B. in großer Zahl sogenannte Teichkläranlagen, die im Wesentlichen aus einem teichförmigen Klärbecken bestehen. Solche Teichkläranlagen können mit der vorliegenden Erfindung auf relativ einfache Weise so umgerüstet werden, dass sie nach dem moderneren und effizienteren Belebungsverfahren mit Aufstaubetrieb arbeiten. Eine solche Umrüstung einer Teichkläranlage in eine sequentielle Wasserkläranlage gemäß der vorliegenden Erfindung kann dadurch erfolgen, dass das Teichvolumen des Klärbeckens durch zwei wasserdichte flexible Folien, die am Beckengrund und an den Beckenrändern verankert werden, in gesonderte Wasseraufnahmevolumina unterteilt werden, wobei für den Betrieb nach dem SBR-Verfahren dann noch Leitungen und Pumpen zum Überleiten des Wassers aus einem Volumen in das Nächste bereitgestellt werden müssen.

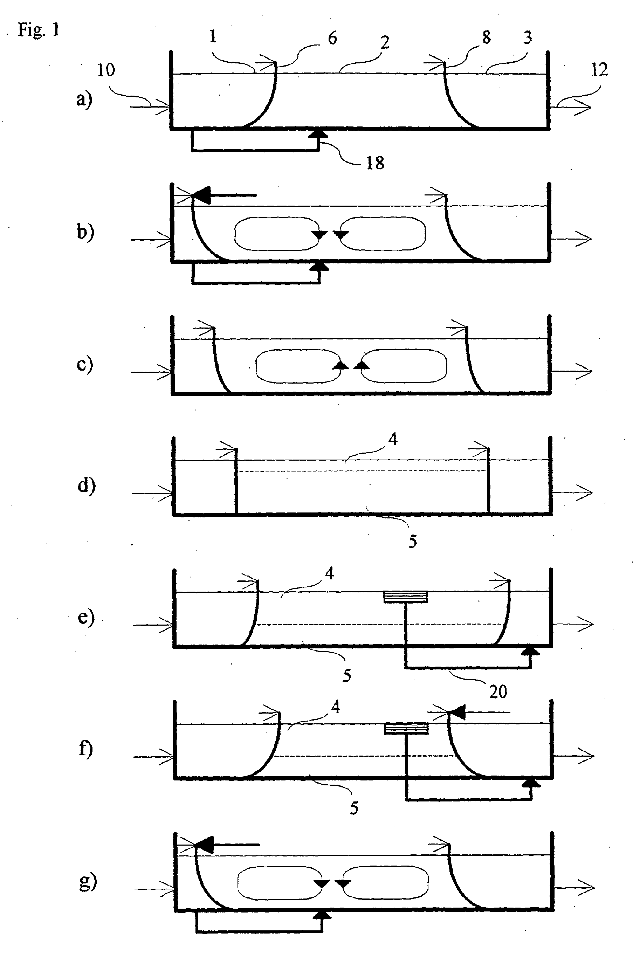

Die Erfindung wird im Folgenden anhand eines Ausführungsbeispiels in den Zeichnungen näher erläutert, wobei Figur 1 a) bis g) schematische Schnittdarstellungen aufeinander folgender Zustände einer sequentiellen Abwasserkläranlage während eines Reinigungszyklus nach einem SBR-Verfahren darstellt, wobei ein Becken durch zwei Trennwände in drei Wasseraufnahmevolumina unterteilt ist.

In Figur 1 ist eine Abwasserkläranlage in seitlichem Schnitt gezeigt. Das Becken wird durch bewegliche Trennwände in Form von flexiblen Folien 6 und 8 in drei Wasseraufnahmevolumina unterteilt, wobei das erste Wasseraufnahmevolumen 1 als Vorspeicherbehälter für einlaufendes Abwasser (angedeutet durch den Pfeil 10) dient, das zweite Wasseraufnahmevolumen 2 als SBR-Becken oder Klärzone fungiert, und das dritte Wasseraufnahmevolumen 3 als Ablaufbehälter wirkt, aus dem geklärtes Wasser kontinuierlich abläuft, angedeutet durch den Pfeil 12.

In der in Figur 1 a) dargestellten Stellung wird eine Charge von Abwasser aus dem Vorspeicherbehälter 1 in das zweite Wasseraufnahmevolumen 2 als Klärzone übergeleitet, wobei diese Überleitung durch eine schematisch angedeutete Leitung 18 mittels einer Pumpe erfolgt. Beim Pumpen der Abwassercharge aus dem Vorspeicherbehälter 1 in die Klärzone vergrößert sich das Volumen der Klärzone durch die übergeleitete Wassermenge und verkleinert sich gleichzeitig das Volumen des Vorspeicherbehälters 1. Dies ist in Figur 1 b) durch die verschobene Folie 6 angedeutet, die durch ihre Beweglichkeit die genannten Volumenänderungen ermöglicht.

In der in Figur 1 b) dargestellten Stellung ist das Befüllen der Klärzone 2 abgeschlossen und es beginnt die durch die kreisförmigen Pfeile angedeutete Mischphase in der Klärzone 2, in der belebter Schlamm aufgewirbelt und mit der zugeführten Abwassercharge gemischt wird. Die Klärzone 2 ist von den beiden angrenzenden Wasservolumina 1 und 3 getrennt, und es findet bis auf weiteres kein Zulauf oder Ablauf statt. Es folgt in Figur 1 c) eine Belüftungsphase der Klärzone 2. Nach einer Reaktionsphase beginnt in Figur 1 d) eine Sedimentationsphase, in der sich der Schlamm abzusetzen beginnt. Diese Klärphasen der Klärzone können sich über mehrere Stunden hinziehen.

Währenddessen läuft weiter Abwasser in den Vorspeicherbehälter 1 ein und zeitgleich fließt geklärtes Wasser aus dem Ablaufbehälter 3 ab, wobei zum Ausgleich dieser Volumenänderungen die Trennwände 6 und 8 eine durch Pfeile angedeutete Bewegung nach links ausführen müssen, um das Volumen des Vorspeicherbehälters 1, in den Abwasser einläuft, zu erhöhen und das Volumen des Ablaufbehälters 3, aus dem, analog zum Zulauf, geklärtes Wasser abfließt, zu erniedrigen. In Figur 1 d) hat in der Klärzone 2 bereits die Sedimentationphase begonnen, so dass sich bereits eine oben liegende Klarwasserschicht 4 und eine darunter liegende sedimentierte Schicht 5 zu bilden beginnt. Diese Sedimentationsphase ist in Figur 1 e) soweit fortgeschritten, dass der Klarwasserabzug beginnt, wobei sich die Bewegung der Trennwände 6 und 8 in den Phasen der Figuren 1 d) und 1 e) weiter fortgesetzt hat, um eine zunehmende Auffüllung des Vorspeicherbehälters 1 und eine zunehmende Entleerung des Ablaufbehälters 3 während dieser Phasen zu ermöglichen.

In Figur 1 f) ist die Klarwasserabzugsphase beendet, in der klares Wasser aus der Klarwasserschicht 4 abgezogen und in den Ablaufbehälter 3 gepumpt wird, was durch die mit 20 bezeichnete Klarwasserabzugseinrichtung bewirkt wird, die Wasser aus der oben liegenden Klarwasserschicht 4 abzieht und in den Ablaufbehälter 3 pumpt.

Nach vollständigem Abzug des Klarwassers aus der Klärzone 2 ist der Ablaufbehälter 3 aufgefüllt, und es beginnt, wie in Figur 1 g) angedeutet, eine neue Füllphase, in der eine Abwassercharge aus dem Vorspeicherbehälter 1 in die Klärzone 2 gepumpt wird.

Wie aus der schematischen Darstellung ersichtlich, kann durch die erfindungsgemäß vorgesehene Unterteilung des Klärbeckens durch flexible Folien 6 und 8 in drei Wasseraufnahmevolumina 1, 2 und 3 der Wasserspiegel in den drei Volumina über einen Reinigungszyklus konstant bleiben, was erhebliche verfahrenstechnische und bauliche Vereinfachungen gegenüber dem Stand der Technik mit sich bringt. Im Stand der Technik musste nämlich jedes Wasseraufnahmevolumen so groß dimensioniert sein, dass es eine komplette Wassercharge aufnehmen konnte. Ferner war der Energieaufwand im Stand der Technik erheblich höher, da das Wasser aus einem Wasseraufnahmevolumen mehr oder weniger komplett in das nächste gepumpt wurde, wobei dabei durch den sich anhebenden Wasserspiegel eine erhebliche Pumpleistung aufgebracht werden musste.

Ferner ist aus der schematischen Darstellung ersichtlich, dass durch die Anlage und das Verfahren der Erfindung die Abwasserklärung mit der hydraulischen Charakteristik einer Durchlaufanlage durchgeführt werden kann, da kontinuierlich Abwasser zufließt (Pfeil 10) und ebenso kontinuierlich geklärtes Wasser aus dem Ablaufbehälter abfließen (Pfeil 12) kann. Apparaturen zur Ablaufmengenregulierung können daher vollkommen entfallen. Weitere verfahrenstechnische und anlagentechnische Vorteile ergeben sich aus dem konstanten Wasserspiegel, wodurch in der Klärzone die Belüftungseinrichtungen und die Umwälzeinrichtungen an diesen Wasserspiegel optimal angepasst werden können.

Die flexible wasserdichte Folie, z.B. eine gewebeverstärkte Kunststoffolie, ist im Beckengrund und an den Beckenwänden verankert ist und reicht mit ihrem oberen Rand bis über den vorgesehenen Wasserspiegel hinaus. Dabei ist die Folie in Bezug auf ihre Fläche gegenüber der Querschnittsfläche des Bekkens mit einem Übermaß versehen, so dass sie sich nach Art eines Segels in die eine oder andere Richtung vorwölben kann, um dadurch eine gegenläufige Volumenänderung in den angrenzenden Aufnahmevolumina zu bewirken. Zu diesem Zweck ist die Folie vorteilhaft an ihrem oberen Rand mit Schwimmkörpern versehen, so dass dieser über dem Wasserspiegel in dem Becken gehalten wird.

Solche flexiblen Folien sind in Figur 1 schematisch dargestellt, worin ein Becken im seitlichen Schnitt gezeigt ist, das durch zwei Folien 6, 8 in drei Wasseraufnahmevolumina 1, 2 und 3 unterteilt ist. Die flexiblen Folien 6, 8 sind am Behältergrund und in den Behälterseiten befestigt sind. Die Fläche jeder Folie ist so groß bemessen, dass sich die Folie wie ein Segel nach der einen Seite oder nach der anderen Seite vorwölben kann. Die exakte Formgebung der flexiblen Folien ist nicht von Bedeutung, solange sie in ausreichendem Maße zur einen und zur anderen Seite vorwölben können. Im Extremfall kann das Volumen eines Wasseraufnahmevolumens auf Null sinken, d.h. z.B. die Folie 6 in Figur 1 sich vollständig an den Beckengrund und Beckenrand anlegen, so dass das Volumen des Wasseraufnahmevolumens 1 Null ist.

Es sind wenigstens zwei Wasseraufnahmevolumina vorhanden, die durch wenigstens eine Folie voneinander abgeteilt sind. Abwasserklärverfahren und -anlagen mit nur zwei Wasseraufnahmevolumina können z.B. eingesetzt werden, wenn wenigstens zwei parallele Klärbecken vorhanden sind. In einem solchen Fall kann z.B. auf den Vorspeicherbehälter verzichtet werden und das einlaufende Abwasser in eine Klärzone einlaufen, während in der anderen Klärzone in diesem Zeitraum die Klärphase abläuft, wobei der Abwasserzulauf dann auf die andere Klärzone umgeschaltet wird, wenn aus dieser das Klarwasser abgezogen ist. Ebenso sind solche zweistraßigen Kläranlagen ohne Ablaufbehälter möglich.

## Patentansprüche

1. Abwasserklärverfahren zur biologischen Abwasserklärung, das als Aufstaubelebungsverfahren (Sequencing-Batch-Reactor-Verfahren) ausgeführt wird, bei dem Abwasser chargenweise aufeinanderfolgend in separate, voneinander abgetrennte Wasseraufnahmevolumina übergeleitet und dort jeweils für eine gewisse Zeit getrennt von den anderen Wasseraufnahmevolumina gehalten wird, **dadurch gekennzeichnet, dass** in einem Becken wenigstens eine bewegliche Trennwand (6, 8) aus wasserdichter flexibler Folie zur Abteilung der separaten Wasseraufnahmevolumina (1, 2, 3) vorgesehen ist, und dass eine Wassercharge von einem in das nächste Wasseraufnahmevolumen bei gleichbleibendem Wasserspiegel in den beiden Wasseraufnahmevolumina gepumpt wird, wobei die flexible Folie oder die flexiblen Folien (6, 8) sich in der Überleitungsphase zum Ausgleich passiv mitbewegen, um die erforderlichen Volumenänderungen der Wasseraufnahmevolumina (1, 2, 3) zu realisieren, indem jede Folie (6, 8), bei fester Verankerung der Trennwand in Beckengrund und - seiten, mit einem Übermaß so bemessen ist, dass sie sich vorwölben kann, um die erforderliche Beweglichkeit zur Volumenänderung der angrenzenden Wasseraufnahmevolumina zu realisieren.

2. Abwasserklärverfahren nach Anspruch 1, **dadurch gekennzeichnet, dass** einlaufendes Abwasser in ein erstes Wasseraufnahmevolumen als Vorspeicherbehälter (1) eingeleitet und gesammelt wird, durch Pumpen in ein zweites Wasseraufnahmevolumen (2) übergeleitet und dort anschließend Misch-, Belüftungs-, Absetz- und Reaktionsphasen unterzogen wird, wonach das oben liegende Klarwasser daraus in das dritte Wasseraufnahmevolumen (3) des Beckens, das als Ablaufbehälter dient, gepumpt wird.

3. Abwasserklärverfahren nach einem der Ansprüche 1 bis 2, **dadurch gekennzeichnet, dass** die beweglichen Trennwände (6, 8) derart bewegt werden, dass die dem Klarwasserabzug entsprechende Wasserspiegelabsenkung durch die Schlammspiegelanhebung infolge der Flächenreduzierung des Wasseraufnahmevolumens in Schlammspiegelhöhe ersetzt wird, so dass sich die Gesamtzeit für die Sedimentations- und Klarwasserabzugsphase verkürzt.

4. Abwasserklärverfahren nach Anspruch 3, **dadurch gekennzeichnet, dass** die flexiblen Folien, (6, 8) derart bewegt werden, dass die Schlammspiegelanhebung immer kleiner ist als die dem Klarwasserabzug entsprechende Wasserspiegelabsenkung.

5. Abwasserkläranlage zur Durchführung eines biologischen Abwasserklärverfahrens nach Patentanspruch 1, mit Pumpeinrichtungen und einer Mehrzahl von separaten, voneinander abgetrennten Wasseraufnahmevolumina, in die Abwasser chargenweise aufeinanderfolgend durch die Pumpeinrichtungen übergeleitet und dort jeweils für eine Zeit abgetrennt von den anderen Wasseraufnahmevolumina gehalten wird, **dadurch gekennzeichnet, dass** die separaten Wasseraufnahmevolumina (1, 2, 3) in einem Becken durch wenigstens eine bewegliche Trennwand (6, 8) aus wasserdichter flexibler Folie abgeteilt sind, die derart beweglich gestaltet ist, dass bei Überleitung von Wasser von einem in das nachfolgende Wasseraufnahmevolumen der Wasserspiegel darin konstant bleibt und die durch die Überleitung in das nächste Wasseraufnahmevolumen bedingte Volumenänderungen der Wasseraufnahmevolumina (1, 2, 3) durch passiv ausgleichende Bewegung der flexiblen Folie oder der flexiblen Folien (6, 8) realisiert wird, indem jede Folie (6, 8), die bei fester Verankerung der Folie in Beckengrund und -seiten mit dem oberen Rand bis zum Wasserspiegel reicht, so mit Übermaß bemessen ist, dass sie sich nach der einen oder der anderen Seite vorwölben kann, um die erforderliche Beweglichkeit zur Volumenänderung der angrenzenden Wasseraufnahmevolumina zu realisieren.

6. Abwasserkläranlage nach Anspruch 5, **dadurch gekennzeichnet, dass** jede flexible Folie (6, 8) mit Schwimmkörpern versehen ist, die den oberen Rand der Folie mindestens auf Höhe des Wasserspiegels in den von der Folie abgeteilten angrenzenden Wasseraufnahmevolumina halten.

7. Abwasserkläranlage nach Anspruch 5, **dadurch gekennzeichnet, dass** jede flexible Folie (6, 8) durch eine Folie aus armiertem Kunststoff gebildet ist.

## Claims

1. Wastewater purification method for biological wastewater purification, which method is carried out as a sequencing batch reactor process, in which method wastewater batches are transferred subsequently to separate water receiving reservoirs which are partitioned from each other and in which the batches are held for a certain period of time separated from the other water receiving reservoirs, **characterized in that** in a basin at least one moveable partition wall (6, 8) made of waterproof flexible foil is provided for partitioning the separate water receiving reservoirs (1, 2, 3), and **in that** a water batch is pumped from one water receiving reservoir to the next with the water level in both water receiving reservoirs remaining constant, wherein the flexible foil or the flexible foils are passively moving during a transfer phase for compensation, in order to realize the required volume changes in the water receiving reservoirs (1, 2, 3) by letting each foil (6, 8) - while the partition wall is fixedly anchored in the basin ground and sidewalls - be dimensioned with an oversize such that it may bulge out in order to provide the necessary movability for volume changes of adjacent water receiving reservoirs.

2. Wastewater purification method according to claim 1, **characterized in that** incoming wastewater is passed into a first water receiving reservoir as an initial accumulation reservoir (1) and is accumulated there, is then passed into a second water receiving reservoir (2) by pumping and thereafter is subjected there to agitation, aeration, sedimentation and reaction phases, whereafter the clear water located in a upper portion of the reservoir is pumped therefrom into third water receiving reservoir (3) of the basin which serves as a discharge reservoir.

3. Wastewater purification method according to any of the claims 1 to 2, **characterized in that** the moveable partitions walls (6, 8) are moved in such a manner that the drawdown of the water level corresponding to the clear water drawing off is compensated by the increase of the sludge level as a result of the area reduction of the water receiving reservoir at the elevation of sludge level so that the total time of the sedimentation and clear water drawing off phase is reduced.

4. Wastewater purification method according to claim 3, **characterized in that** the flexible foils (6, 8) are moved in such a manner that the rising of the sludge level is always lower than the water level drawdown due to the drawing off of clear water.

5. Wastewater purification installation for carrying out a biological waste water purification method according to claim 1, comprising pumping means and a plurality of separate water receiving reservoirs partitioned from each other, into which reservoirs waste water batches are passed on subsequently by the pumping means and in which the passed on wastewater batches are held separated from the other water receiving reservoirs for a period of time period, **characterized in that** the separate water receiving reservoirs (1, 2, 3) are partitioned in a basin by at least one moveable partition wall (6, 8) made of waterproof flexible foil, which partition walls are adapted to be moveable in such a manner that upon transfer of water from one water receiving reservoir into the following the water level therein remains constant and that the volume changes of the water receiving reservoirs (1, 2, 3) caused by the transfer into the next water receiving reservoir is realized by a passive, compensating movement of the flexible foil or the flexible foils (6, 8) by letting each foil (6, 8), which with the foil being fixedly anchored in the basin ground and sides extends with its upper edge beyond the water level, be dimensioned with such an oversize that it can bulge out to one side or the other in order to realize the required moveability for the volume changes in the adjacent water receiving reservoirs.

6. Wastewater purification installation according to claim 5 **characterized in that** each flexible foil (6, 8) is provided with buoying bodies which hold the upper edge of the foil at least at the level of the water level in the adjacent water receiving reservoirs partitioned by the foil.

7. Wastewater purification installation according to claim 5, **characterized in that** each flexible foil (6, 8) is formed by a foil of reinforced plastic.

## Revendications

1. Procédé d'épuration des eaux usées pour l'épuration biologique des eaux usées qui est exécuté comme procédé d'activation par accumulation (procédé par réacteur séquencé discontinu) pour lequel les eaux usées sont amenées par charges consécutives dans des volumes de réception d'eau à part, séparés les uns des autres et y sont retenus respectivement pour une certaine durée en étant séparés des autres volumes de réception d'eau, **caractérisé en ce qu'**il est prévu dans un bassin au moins une cloison de séparation mobile (6, 8) en feuille flexible étanche à l'eau pour diviser les volumes de réception d'eau séparés (1, 2, 3) et qu'une charge d'eau est pompée d'un volume de réception d'eau dans le prochain volume de réception d'eau, le niveau d'eau restant constant dans les deux volumes d'eau, la feuille flexible ou les feuilles flexibles (6, 8) se déplaçant en même temps de manière passive pour compenser dans la phase de transvasement pour réaliser les variations de volume nécessaires des volumes de réception d'eau (1, 2, 3), chaque feuille (6, 8) étant dimensionnée avec une surmesure, la cloison de séparation étant ancrée de manière fixe au fond et sur les côtés du bassin, de manière à pouvoir se précintrer pour réaliser la mobilité nécessaire pour la variation de volume des volumes de réception d'eau adjacents.

2. Procédé d'épuration des eaux usées selon la revendication 1, **caractérisé en ce que** les eaux usées qui arrivent sont amenées et collectées dans un premier volume de réception d'eau comme cuve de préstockage (1), transvasées par pompage dans un second volume de réception d'eau (2) où elle sont soumises ensuite à des phases de mélange, d'aération, de décantation et de réaction, ce après quoi l'eau claire qui se situe au-dessus est pompée de là dans le troisième volume de réception d'eau (3) du bassin qui sert de cuve de sortie.

3. Procédé d'épuration des eaux usées selon l'une des revendications 1 à 2, **caractérisé en ce que** les cloisons de séparation mobiles (6, 8) sont déplacées de telle manière que la baisse du niveau d'eau correspondant au retrait d'eau claire est remplacé par l'augmentation du niveau de boue par suite de la réduction de la surface du volume de réception d'eau à la hauteur du niveau de boue si bien que le temps total pour la phase de sédimentation et de retrait d'eau claire est réduit.

4. Procédé d'épuration des eaux usées selon la revendication 3, **caractérisé en ce que** les feuilles flexibles (6, 8) sont déplacées de telle manière que l'augmentation du niveau des boues est toujours inférieure à la baisse du niveau d'eau correspondant au retrait d'eau claire.

5. Installation d'épuration des eaux usées pour exécuter un procédé d'épuration biologique des eaux usées selon la revendication 1 avec des dispositifs de pompe et une multitude de volumes de réception d'eau à part, séparés les uns des autres, dans lesquels des eaux usées sont transvasées par charges consécutives par les dispositifs de pompe et y sont retenues respectivement pour une durée en étant séparés des autres volumes de réception d'eau, **caractérisée en ce que** les volumes de réception d'eau séparés (1, 2, 3) sont divisés dans un bassin par au moins une cloison de séparation mobile (6, 8) en feuille flexible étanche à l'eau qui est configurée mobile de telle manière que le niveau d'eau y reste constant lors du transvasement de l'eau d'un volume de réception d'eau dans le volume de réception d'eau suivant et que les variations de volume des volumes de réception d'eau (1, 2, 3) conditionnées par le transvasement dans le prochain volume de réception d'eau sont réalisées par un mouvement compensatoire passif de la feuille flexible ou des feuilles flexibles (6, 8), cependant que chaque feuille (6, 8) qui, tout en étant ancrée de manière fixe au fond et sur les parois du bassin avec le bord supérieur, va jusqu'au niveau de l'eau, est dimensionnée avec une surmesure de manière à pouvoir se précintrer pour réaliser la mobilité nécessaire pour la variation de volume des volumes de réception d'eau adjacents.

6. Installation d'épuration des eaux usées selon la revendication 5, **caractérisée en ce que** chaque feuille flexible (6, 8) est équipée de corps flottants qui retiennent le bord supérieur de la feuille au moins à la hauteur du niveau de l'eau dans les volumes de réception d'eau adjacents, divisés par la feuille.

7. Installation d'épuration des eaux usées selon la revendication 5, **caractérisée en ce que** chaque feuille flexible (6, 8) est formée par une feuille en matière synthétique armée.
